# EUROPEAN PATENT APPLICATION

(11) **EP 4 810 312 A1**
(43) Date of publication of application: **23.09.2026**
(21) Application number: 26165609.4
(22) Date of filing: 17.03.2026
(51) Int. Cl.: B60N 2/015, B60N 2/08

(54) **REMOVABLE SLIDING ASSEMBLY FOR A SLIDING DEVICE FOR VEHICLE SEATS**

(30) Priority: 18.03.2025 IT 202500005469
(71) Applicant: MFI Italy Engineering S.r.l., 20121 Milano (IT)
(72) Inventor: LAERA, Gianluca, 20121 MILANO (MI) (IT); HIREMATH, Prasanna, 20121 MILANO (MI) (IT); ADAMO, Giorgio, 20121 MILANO (MI) (IT); MISCIOSCIA, Maria, 20121 MILANO (MI) (IT)
(74) Representative: Robba, Pierpaolo

(57) **Abstract**

The present invention relates to a sliding assembly (100) for a sliding device for a vehicle seat which comprises at least one anchoring mechanism (20), movable between an operative position, in which it is adapted to engage with the possibility of sliding a lower rail of a sliding device, and an inoperative position, in which it is adapted to be disengaged from said lower rail. The anchoring mechanism is brought from the operative position to the inoperative position by a combined movement including a translational movement component along a direction substantially perpendicular to the vehicle floor and a rotational movement component around an axis substantially parallel to the vehicle floor and oriented along the longitudinal direction. The sliding assembly (100) further comprises a locking element (10) for selectively engaging without possibility of sliding said lower rail. In a preferred embodiment, the sliding assembly further comprises a play recovery element (50) that allows compensation for any play between the sliding assembly and said lower rail in the three Cartesian directions.

## Description

### Technical Field of the Invention

The present invention relates to a removable sliding assembly for a sliding device for a vehicle seat.

More specifically, the present invention relates to a sliding assembly that allows both the sliding of a vehicle seat in a direction parallel to the direction of travel of the vehicle and the removal of the seat from the passenger cockpit of the vehicle.

### Prior Art

Vehicle seats generally have a sliding function for pushing or pulling the seat cushion in a forward or rearward direction parallel to the direction of travel of the vehicle, a height adjusting function for adjusting the height of the seat cushion relative to the floor of the vehicle cockpit, and a reclining function for adjusting the inclination of the seat backrest relative to the seat cushion.

The aforementioned sliding function of the vehicle seat is generally implemented by a sliding device which may comprise a pair of parallel tracks, each of which comprises a lower rail fixed to the floor of the vehicle and an upper rail fixed to the vehicle seat, the upper rail being constrained to the lower rail, but capable of sliding relative to said lower rail.

The sliding device further comprises a locking system for enabling / preventing the sliding movement of the upper rails relative to the lower rails. Such a locking system is normally in a locking configuration, in which it prevents the upper rails from sliding relative to the lower rails, thus preventing accidental movements of the vehicle seat relative to the vehicle floor.

Such a locking system normally comprises a pair of locking assemblies, one for each guide.

If it is desired to be able to completely remove the seat from the vehicle cockpit, the upper rail of each track is replaced by a sliding assembly that is fastened to the vehicle seat and is able to slide relative to the lower rail of the respective track.

In this case, the sliding assembly carries the one or more locking elements that selectively allow or prevent the sliding of the sliding assembly itself (and, consequently, of the vehicle seat) relative to the lower rail (and, consequently, relative to the vehicle floor).

Such sliding assembly is normally constrained to the lower rail of the respective track.

However, it is constrained to the lower rail in a removable manner, so that, if necessary, it can be released from said lower rail, thus making the vehicle seat completely disconnected from the vehicle floor.

For this purpose, the sliding assembly comprises one or more anchoring mechanisms that are switchable from a first configuration, in which the sliding assembly is constrained to the lower rail of the respective track (without prejudice to the possibility of sliding along said lower rail), to a second configuration, in which the sliding assembly is completely disconnected from said lower rail.

Examples of sliding assemblies of the type described above can be found, for example, in documents DE102019206256, FR 3 080 805 and EP 3 162 614.

However, sliding assemblies for sliding devices for vehicle seats as known from the art are not free from drawbacks.

More particularly, in known sliding assemblies, the anchoring mechanisms that allow the sliding assembly to be removably constrained to the lower rail of the sliding device track have a complex structure and unreliable operation.

Furthermore, the positioning of the sliding assembly with respect to the lower rail of the respective track when the one or more locking elements are in the configuration in which they prevent sliding relative to said lower rail and the anchoring mechanisms are in the configuration in which they constrain said locking assembly to said lower rail may be subject to even significant play, which makes the position of the vehicle seat with respect to the vehicle floor unstable.

Therefore, the main object of the present invention is to provide a sliding assembly for a sliding device for vehicle seats in which the structure and operation of the components intended to removably constrain the sliding assembly to the respective track are improved. Another object of the present invention is to provide a sliding assembly for a sliding device for vehicle seats that allows a stable and play-free positioning of the vehicle seat relative to the vehicle floor.

These and other objects are achieved by a sliding assembly for a sliding device for vehicle seats as claimed in the appended claims, as well as by a sliding device that includes said sliding assembly.

### Summary of the Invention

The invention relates to a sliding assembly for a sliding device for a vehicle seat comprising at least one locking element, movable between an operative position, in which it is adapted to engage the lower rail of a track of a sliding device, and an inoperative position, in which it is adapted to be disengaged from said lower rail of said track, and further comprising at least one anchoring mechanism, movable between an operating position, in which it is adapted to slidably engage said lower rail of said track, and an inoperative position, in which it is adapted to be disengaged from said lower rail of said track.

In short:
- during normal operation, the at least one locking element is in the operating position and the at least one anchoring mechanism is in the operating position;
- when the user wishes to change the position of the vehicle seat relative to the vehicle floor in the longitudinal direction (i.e. in a direction parallel to the direction of travel of the vehicle), the at least one locking element is brought to the inoperative position and the at least one anchoring mechanism is maintained in the operating position;
- when the user wishes to completely remove the vehicle seat from the vehicle floor, the locking element is brought to the inoperative position and the anchoring mechanism is brought to the inoperative position.

According to the invention, the anchoring mechanism (or each anchoring mechanism) is brought from the operative position to the inoperative position by means of a combined movement comprising a translational movement component along a direction substantially perpendicular to the vehicle floor and a rotational movement component about an axis substantially parallel to the vehicle floor and oriented along the longitudinal direction.

Correspondingly, the anchoring mechanism comprises a first anchoring element, which is movable with a translational motion along a direction substantially perpendicular to the vehicle floor, and a second anchoring element, which is pivotally mounted on the first anchoring element, so as to be movable with a rotary motion about an axis substantially parallel to the floor of the vehicle and oriented along the longitudinal direction so that it is able to releasably engage the lower rail of the respective sliding track.

The first anchoring element acts as a driving element and the second anchoring element acts as a driven element.

When the anchoring mechanism has to be brought to the inoperative position, the first anchoring element is made to translate and drags the second anchoring element with it. Along the path of the second anchoring element, an abutment is provided which is appropriately positioned so as to cause a progressive rotation of said second anchoring element as it translates, thus causing it to disengage from the lower rail of the track.

The sliding assembly comprises an external casing, for example in the form of a substantially parallelepiped cassette, and the second anchoring element is in a protruding position with respect to said external casing when the anchoring mechanism is in the operative position, while it is in a retracted position inside the external casing when the anchoring mechanism is in the inoperative position.

The external casing carries the abutment that causes the progressive rotation of the second anchoring element during its translation.

The locking element (or each locking element) is also in a protruding position with respect to said external casing when it is in the operative position, while it is in a retracted position inside the external casing when it is in the inoperative position.

In a particularly preferred embodiment of the invention, the sliding assembly comprises at least one play recovery element that allows compensation for any play present between the sliding assembly and the lower rail of the track in the three Cartesian directions.

Said play recovery element is capable of switching from an operative position, in which it performs its play recovery function, to an inoperative position, in which it does not interfere with the normal operation of the sliding assembly.

Therefore, the play recovery element is configured so as to switch to the inoperative position both when the locking element is brought to the inoperative position for obtaining the sliding of the sliding assembly relative to the lower rail of the sliding track (with the anchoring mechanism maintained in the operative position), and when the anchoring mechanism is brought to the inoperative position for obtaining the removal of the sliding assembly from said lower rail.

In a preferred embodiment of the invention, the play recovery element comprises a fixed component and a movable component comprising respective cam profiles that cooperate with each other in such a way that the movable component can be moved as a result of contact with the fixed component in a rotational movement about an axis substantially perpendicular to the vehicle floor and, simultaneously, in a translational movement along a direction substantially perpendicular to the vehicle floor.

In this preferred embodiment of the invention, the movable component carries an engagement component that passes from said operative position to said inoperative position and vice versa when said movable component is rotated and translated as a result of contact with the fixed component.

### Brief Description of the Drawings

Further features and advantages of the invention will become more evident from the detailed description of a preferred embodiment thereof, given by way of non-limiting example with reference to the attached drawings, in which:
Figure 1 is a perspective view of a sliding assembly according to the invention;
Figure 2a Figure 2b and Figure 2c are longitudinal sectional views of the sliding assembly of Figure 1, shown in three different configurations;
Figure 3 is a cross-sectional view of the sliding assembly of Figure 1;
Figure 4 is an enlarged view of detail IV of Figure 2a, relating to a play recovery element of the sliding assembly;
Figure 5a and Figure 5b show a locking element of the sliding assembly of Figure 1, shown in the operative position and, respectively, in the inoperative position;
Figure 6a and Figure 6b show a stop element for the actuating element of the sliding assembly of Figure 1, shown in the operative position and, respectively, in the inoperative position;
Figure 7a and Figure 7b show the anchoring mechanism of the sliding assembly of Figure 1, shown in the operative position and, respectively, in the inoperative position;
Figure 8a and Figure 8b show the play recovery element of the sliding assembly of Figure 1, shown in the operative position and, respectively, in the inoperative position.

### Detailed Description of a Preferred Embodiment of the Invention

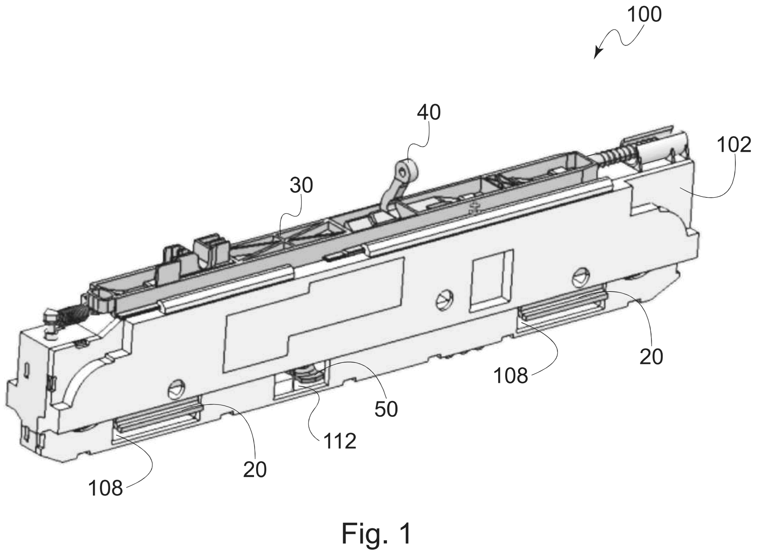

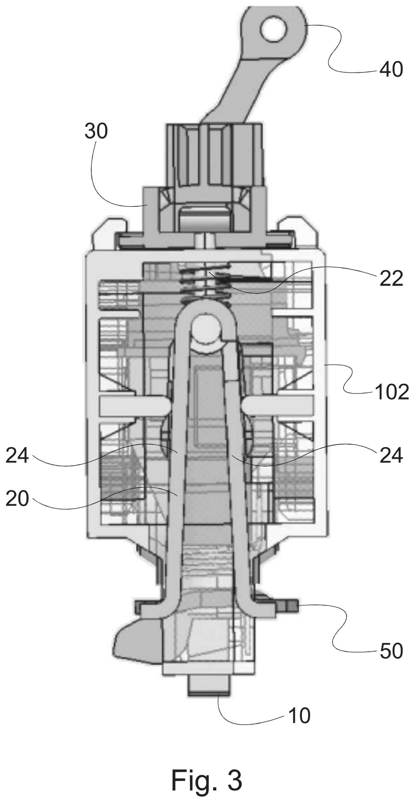

With reference to Figures 1 - 3, a sliding assembly 100 according to a preferred embodiment of the invention is shown.

Said sliding assembly comprises an outer casing 102, made in the form of a substantially parallelepiped cassette, inside which are received:
- at least one locking element (a single locking element 10 in the shown example);
   and
- at least one anchoring mechanism (two anchoring mechanisms 20 in the shown example).

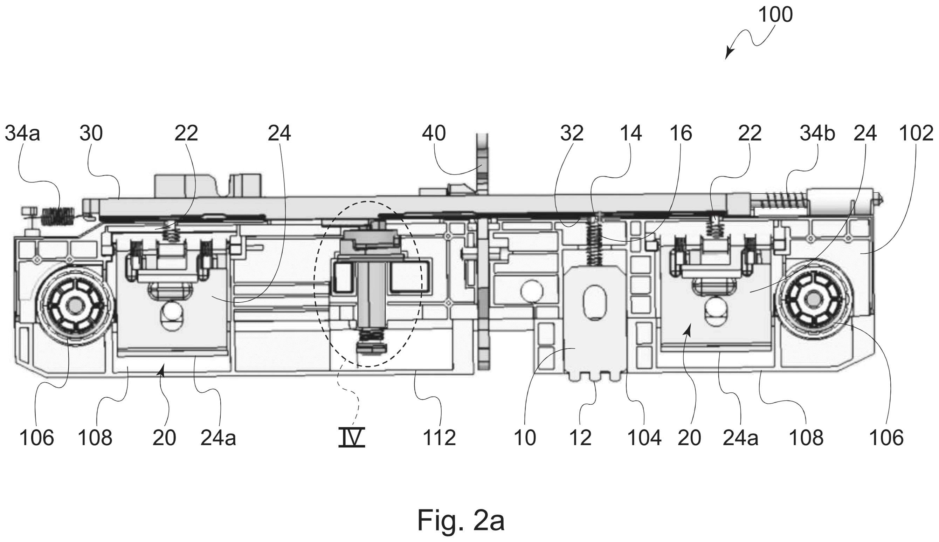

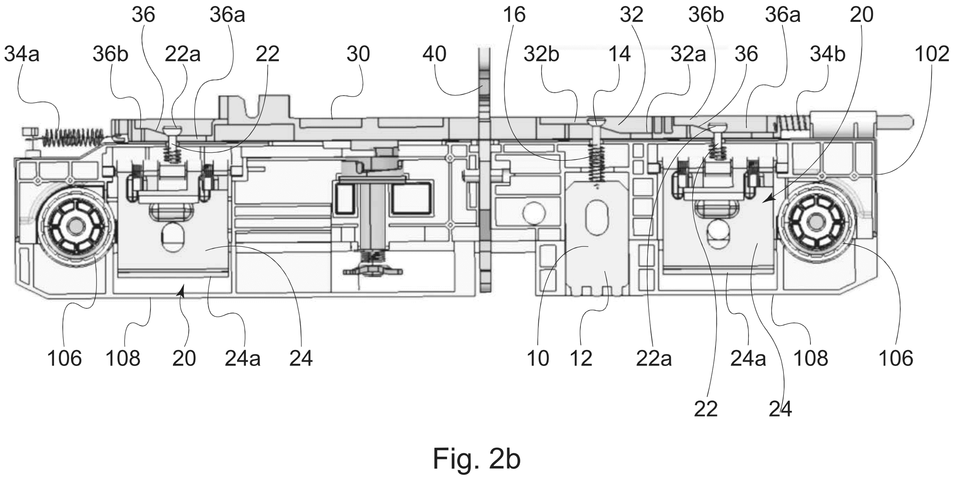

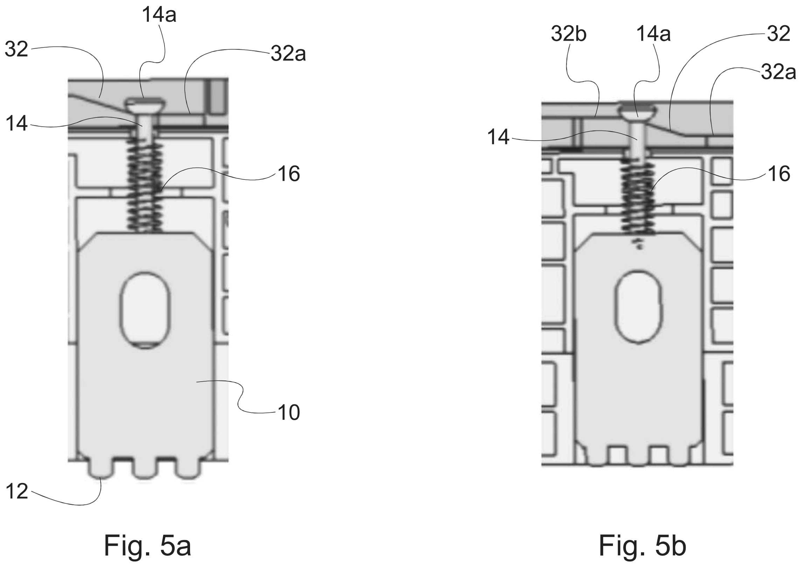

The locking element 10 is movable with a translational motion along a substantially vertical direction (i.e. perpendicular to the vehicle floor) between an operative position (shown in Figure 2a and also shown in Figure 5a), in which it extends outside the cassette 102 through a corresponding bottom window 104 and protrudes from it for engaging the lower rail of a corresponding track of a sliding device, and an inoperative position (shown in Figure 2b and also shown in Figure 5b), in which it is retracted inside the cassette 102 and cannot engage said lower rail of the corresponding track of the sliding device.

For example, the locking element 10 comprises a plurality of protruding teeth 12 suitable for engaging in respective seats formed in said lower rail of said track.

The sliding assembly 100 comprises an actuating element 30 for bringing the locking element 10 from the operative position to the inoperative position, and vice versa.

In the illustrated embodiment, the actuating element is made in the form of a slider 30 that can slide in a longitudinal direction (i.e. in a direction parallel to the direction of travel of the vehicle and to the lower rail of the sliding device) along the external casing 102 of the sliding assembly.

With reference to Figures 2a and 2b and also to Figures 5a and 5b, the slider 30 is provided, on its surface oriented towards the locking element (its lower surface in the

Figures), with a first driving surface 32, made as a vertically sloped surface.

Correspondingly, the body of the locking element 10 is provided with a driving rod 14 having a head 14a that engages with the first driving surface 32 of the slider 30.

During normal vehicle travel, the slider 30 is positioned such that the head 14a of the driving rod 14 of the locking element 10 is positioned at a lower portion 32a of the first driving surface 32 of the slider 30 (see Figure 5a).

Consequently, the locking element is maintained in the operative position, in which it protrudes downwards through the bottom window 104 of the cassette 102 (see Figure 2a). In a manner known per se, the lower rail of the sliding device comprises a plurality of seats or openings distributed in the longitudinal direction of said lower rail, and in the operative position the teeth 12 of the locking element 10 penetrate into corresponding seats of said lower rail.

The teeth 12 are pushed and firmly held inside the seats of the lower rail by a compression spring 16 mounted on the driving rod 14 of the locking element 10.

When the user wants to change the position of the vehicle seat, they acts on a first releasing member of the sliding device (made for instance in the form of a releasing handlebar), which in turn acts on the slider 30, causing it to slide (to the right in the

Figures) against the resistance of one or more springs 34a, 34b.

As a result of the sliding of the slider 30, the head 14a of the driving rod 14 of the locking element 10 slides along the sloped first driving surface 32 of said slider (against the resistance of the compression spring 16) until it reaches a higher portion 32b of said first driving surface 32 of the slider 30.

Consequently, the locking element 10 is pulled upwards and brought to the inoperative position, in which it is retracted inside the cassette 102 and the teeth 12 are disengaged from the seats of the lower rail of the sliding device (see Figure 5b).

In this condition and as long as the user acts on the first releasing member of the sliding device, the sliding assembly 100 can freely slide along the lower rail of the sliding device.

To facilitate the sliding of the sliding assembly 100 along the lower rail of the sliding device, the cassette 102 may advantageously be provided with wheels 106 that roll on the surface of said lower rail (see Figure 2b).

For example, as illustrated in the Figures, a pair of wheels 106 may be provided at or near the opposite longitudinal ends of the cassette 102.

When the seat is in the new desired position and the user releases the first releasing member of the sliding device, the slider 30 slides back to its initial position due to the return force of the springs 34a, 34b.

Correspondingly, the head 14a of the driving rod 14 of the locking element 10 slides back along the first driving surface 32 of the slider 30 until it is again positioned at the lower portion 32a of said first driving surface.

In this configuration, the locking element 10 is once again in its operative position and its teeth 12 are inserted in new seats of the lower rail of the sliding device.

During the operation of adjusting the position of the vehicle seat described above, the sliding movement of the slider 30 is limited to a first stroke having a first length by a stop element 40 arranged on the path of the slider 30.

Consequently, during the operation of adjusting the position of the vehicle seat described above the sliding assembly 100, although it can slide relative to the lower rail of the sliding device, is maintained in any case constrained to said lower rail by means of the anchoring mechanisms 20, which are constantly engaged with said lower rail.

With reference to Figures 2a - 2c, in order to be able to completely remove the sliding assembly from the lower slide rail (and, consequently, completely remove the vehicle seat from the vehicle cockpit), each of the anchoring mechanisms 20 is switchable between an operative position, in which it extends outside the cassette 102 through corresponding side windows 108 and protrudes therefrom for engaging the lower rail of the sliding device, and an inoperative position, in which it is retracted inside the cassette 102 and cannot engage with said lower slide rail.

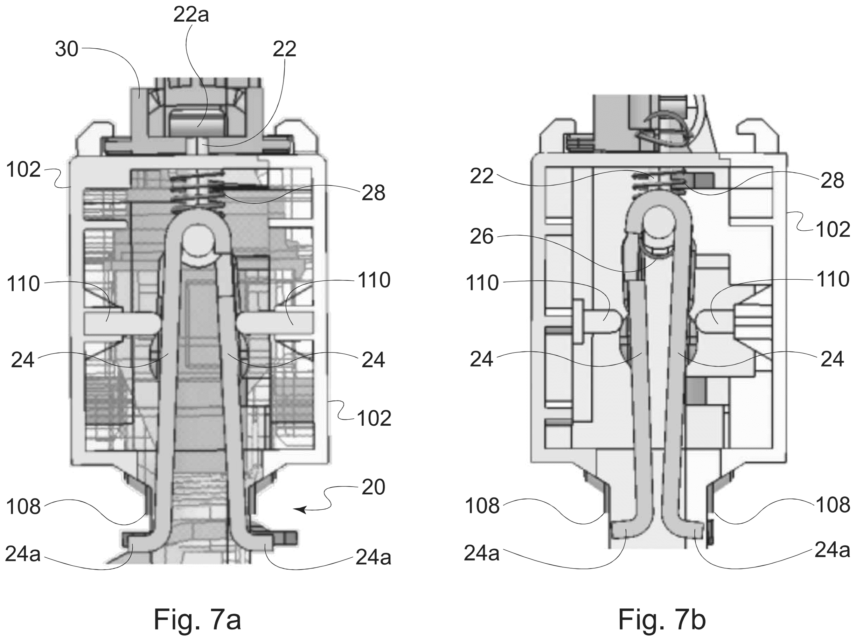

Referring also to Figures 7a and 7b, each anchoring mechanism 20 comprises a first anchoring element 22 made in the form of a driving shaft and a pair of second anchoring elements 24 which are pivotally mounted, at a first end thereof, on the first anchoring element.

At their second end, opposite the first end, the second anchoring elements are provided with a protruding edge 24a.

The second anchoring elements 24 are mounted on the first anchoring element 22 with the interposition of a torsion spring 26 which urges the second anchoring elements outwards from the cassette 102, away from each other.

In this configuration, the anchoring mechanisms 20 are in the operative position and at least the protruding edges 24a of the second anchoring elements 24 protrude outwards from the cassette 102 (see Figure 7a).

In a manner known per se, the lower rails of the slider guides may comprise opposite, inwardly bent edges.

In the operative position of the anchoring mechanisms, the protruding edges 24a of the second anchoring elements 24 can then engage with the inwardly bent edges of the corresponding lower rail, thus constraining the sliding assembly 100 to said lower rail. For bringing the anchoring mechanisms from the operative position to the inoperative position, the slider 30 is provided, on its surface oriented towards the anchoring mechanisms (its lower surface in the Figures), with corresponding second driving surfaces 36, made as vertically sloped surfaces.

The first anchoring element 22 of each anchoring mechanism 20 is correspondingly provided with a head 22a that engages with a corresponding second driving surface 36 of the slider 30.

Each second driving surface 36 is shaped in such a way that during normal vehicle travel the head 22a of the first anchoring element 22 of the corresponding anchoring mechanism 20 is positioned at a lower portion 36a of the second driving surface 36 of the slider 30 (see Figure 7a).

Consequently, the anchoring mechanism is in the operative position, in which the protruding edges 24a of the second anchoring elements 24 protrude outside the cassette 102 and engage with the lower rail of the sliding device.

Furthermore, the lower portion 36a of the second driving surface 36 of the slider 30 is sized such that during the adjustment of the seat position the head 22a of the first anchoring element 22 of the corresponding anchoring mechanism 20 slides along said lower portion 36a of said second driving surface and the anchoring mechanism is constantly maintained in the operative position, and the sliding assembly 100 is kept constrained to the lower rail of the sliding device (as can be seen by comparing Figure 2a and 2b).

In other words, the lower portion 36a of the second driving surface 36 of the slider 30 is sized such that, as long as the slider 30 slides along its first stroke with the first length, the first anchoring element 22 of the corresponding anchoring mechanism 20 slides along said lower portion 36a of said second driving surface.

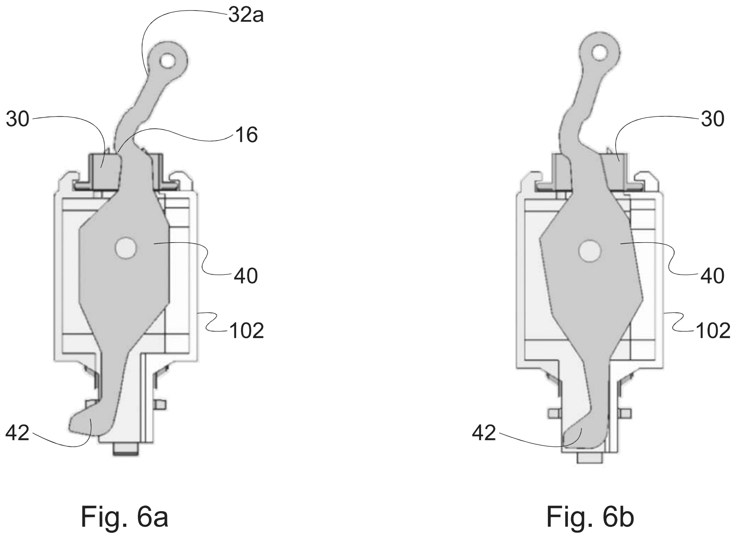

With reference also to Figures 6a and 6b, when the user wants to remove the vehicle seat from the vehicle cockpit, they acts on a second releasing member of the sliding device, which in turn acts on the stop element 40 of the sliding assembly 100.

In the shown example, the stop element of the sliding assembly 100 is made in the form of a lever 40 which is pivotally hinged on the cassette 102 and which is connected at a first end thereof to the second releasing member of the sliding device.

As long as the user does not act on said second releasing member of the sliding device, the lever 40 is positioned in such a way as to limit the sliding of the slider 30 (see Figure 6a), so that it can slide through its first stroke, of a length sufficient to move the locking element 10 between the operative position and the inoperative position, but insufficient to move the first anchoring element 22 of each anchoring mechanism 20 from the lower portion 36a of the corresponding second driving surface 36 of the slider 30.

When the user acts on the second releasing member, the lever 40 is rotated to a position in which it no longer hinders the sliding of the slider 30 (see Figure 6b), so that said slider 30 can slide through a second stroke having a second length, greater than the first length of the first stroke.

As a result of the sliding of the cursor 30 through said second stroke, the head 22a of the first anchoring element 22 of each anchoring mechanism 20 slides along the corresponding sloped second driving surface 36 of said cursor 30, against the resistance of a compression spring 28 mounted on said first anchoring element 22 until it reaches a higher portion 36b of said corresponding second driving surface 36 of the slider 30.

Consequently, the first anchoring element 22 is pulled upwards and drags the second anchoring elements 24 with it.

For each second anchoring element 24, an abutment 110 is provided inside the cassette 102, which abutment interferes with the corresponding second anchoring element 24 during its upward translation movement, causing it to rotate towards the inside of the cassette 102 (against the resistance of the torsion spring 26).

In the illustrated example, each abutment 110 is made in the form of a block mounted on a side wall of the cassette 102 and protruding inwardly, in a direction substantially perpendicular to said side wall.

However, the abutments 110 could also be made in other ways, for example as wedges or tapered surfaces, provided that they are capable of creating a constriction for the second anchoring elements 24 as they translate upwards.

Due to the effect of the abutment 110, as the second anchoring element 24 translates upwards, it simultaneously rotates until its protruding edge 24a re-enters the inside of the cassette 102 through the corresponding side window 106.

In this configuration, the anchoring mechanisms are in the inoperative position, in which the protruding edges 24a of the second anchoring elements 24 are retracted inside the cassette 102 and are disengaged from the lower rail of the sliding device (see Figure 7b). Since the second stroke of the slider 30 is longer than the first stroke of said slider, in this configuration the locking element 10 has already been brought to its inoperative position thanks to the first driving surface 32 of said slider.

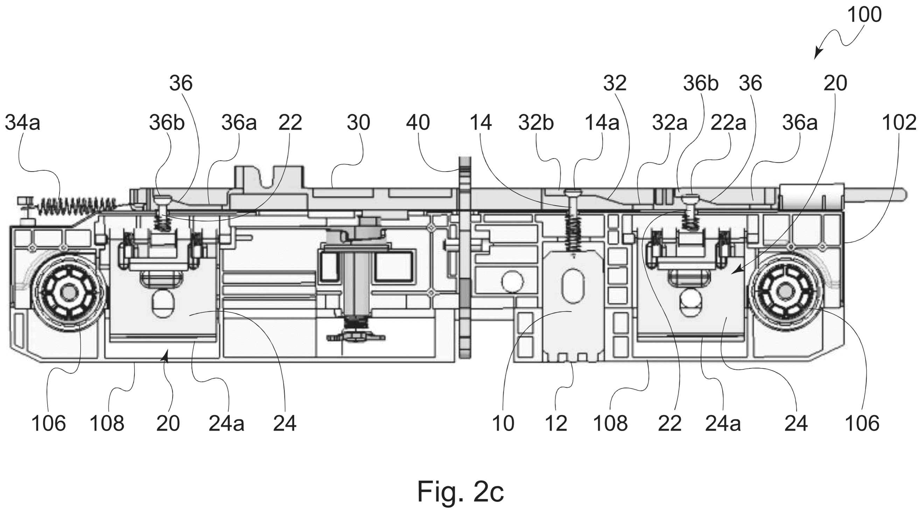

Therefore, in this condition, the sliding assembly 100 is completely released from the lower rail of the sliding device and can be removed from it (see Figure 2c).

It is to be noted that, in the illustrated example, the lever 40 can be used as an additional anchoring element.

Said lever 40 is in fact equipped, at its second end, opposite to the first end at which it is operationally connected to the second releasing member of the sliding device, with a hook 42, which during normal operation protrudes outside the cassette 102 and can also engage with the surface of the lower rail of the sliding device (see Figure 6a). When the user acts on the second releasing member of the sliding device, due to the rotation of the lever 40, the hook 42 is also brought inside the cassette 102.

When the user wishes to reassemble the vehicle seat in the vehicle cockpit, they simply repositions the sliding assembly 100 on the lower rail of the sliding device: as soon as they releases the second releasing member, the cursor 30 slides back to its initial position due to the return force of the springs 34a, 34b; correspondingly, the head of the first anchoring element of each anchoring mechanism 20 slides back along the corresponding second driving surface 36 of the slider 30 until it is again positioned at the lower portion 36a of said second driving surface; at the same time, the second anchoring elements 24 of each anchoring mechanism 20 move downwards and, no longer being hindered by the abutments 110, are rotated outwards by the torsion spring 26.

Finally, the second anchoring elements 24 of each anchoring mechanism 20 rotate until their protruding edges 24a protrude outside the cassette 102 and engage again with the lower rail: the anchoring mechanism is again in its operative position.

It is to be noted that, theoretically, each anchoring mechanism could comprise only one second anchoring element 24. However, for obvious reasons of symmetry and in order to provide stability to the sliding assembly 100, it is absolutely preferable that each anchoring mechanism comprises a pair of second anchoring elements 24 mounted on opposite sides of the first anchoring element and adapted to protrude on opposite sides of the cassette 102 and engage with opposite longitudinal edges of the lower rail of the sliding device.

It is also to be noted that the sliding devices usually comprise a pair of sliding tracks parallel and spaced from each other.

Two sliding assemblies 100 will therefore be provided, one for each sliding tracks and the first releasing member and the second releasing member of the sliding device will preferably be designed so as to act simultaneously and in the same way on both sliding assemblies 100.

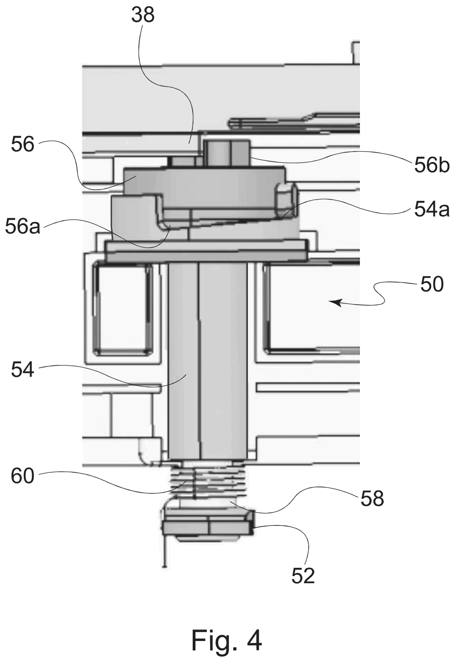

In the embodiment of the invention shown in the Figures, the sliding assembly 100 comprises a play recovery element 50, also illustrated in greater detail in Figure 4, which allows compensation for any play present between the sliding assembly 100 and the lower rail of the track in the three Cartesian directions when the locking element 10 and the anchoring mechanisms 20 are in their operative position.

Said play recovery element comprises an engagement component, made for example in the form of a tab 52, which can protrude from the cassette 102 through a corresponding side window 112 and engage the lower rail of the sliding device, so as to compensate for any play present between the teeth 12 of the locking element and the respective seats of the lower rail and maintain the vehicle seat in the position selected by the user with greater stability.

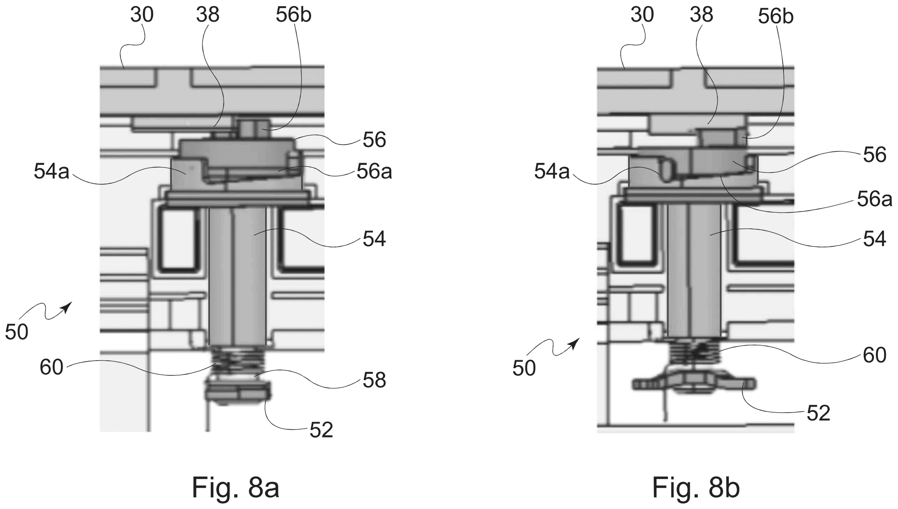

With reference also to Figures 8a and 8b, in order to allow both the adjustment of the position of the vehicle seat and its removal from the vehicle cockpit, the play recovery element 50 is able to switch from an operative position, in which the tab 52 engages the lower rail of the sliding device, to an inoperative position, in which said tab 52 is retracted inside the cassette 102 and does not interfere with said lower rail.

In the illustrated example, the play recovery element comprises a fixed component 54, mounted on the cassette 102, and a movable component 56, the fixed component and the movable component being provided with respective cam profiles 54a, 56a cooperating with each other.

The tab 52 of the play recovery element is connected to the movable component 56 by means of a stem 58.

In the illustrated embodiment, the slider 30 also acts as an actuating element for the play recovery element 50 and for this purpose comprises on its face facing said play recovery element (its lower face in the Figures) a protrusion 38 which cooperates with a projection 56b obtained in the movable component 56 of the play recovery element 50.

When the slider 30 is slid, due to the cooperation between the protrusion 38 and the projection 56b of the movable component 56 of the play recovery element, it pushes said movable component 56. Due to the cooperation of its cam profile with the cam profile of the fixed component 54, the movable component rotates, against the resistance of a spring 60 mounted on the stem 58, and simultaneously translates downwards.

Due to the rotation of the movable component 56, the tab 52 switches from an operative position, in which it protrudes from the cassette 102 and engages the lower rail of the sliding device (see Figure 8a) to an inoperative position, in which it is rotated by approximately 90° and is completely retracted inside the cassette 102 (see Figure 8b).

In this inoperative position, the play recovery element 50 does not interfere with either the adjustment of the position of the vehicle seat or its removal from the vehicle cockpit. When the slider 30 is brought back to its initial position, the counter-rotation of the movable component 56 (always driven by the projection 38 of the slider 30) brings back the play recovery element 50 and the tab 52 to the operative position.

Since the slider 30 actuates the movable component 56 of the play recovery element after it starts to slide, said play recovery element 50 is advantageously brought into the inoperative position both when the slider moves through the first stroke for bringing the locking element 10 to its inoperative position for the purpose of adjusting the position of the vehicle seat, and when the slider moves through the second stroke for bringing the anchoring mechanisms 20 to their inoperative position for the purpose of removing said vehicle seat.

The above description of a preferred embodiment of the invention has been given solely by way of example and numerous variations and modifications within the reach of the person skilled in the art can be envisaged, without departing from the scope of protection defined by the accompanying claims.

For example, although the embodiment illustrated above provides a single actuating element that acts on the locking element and the anchoring mechanisms and the play recovery element, it would also be possible to provide separate and independent actuating elements for the locking element, for the anchoring mechanisms and for play recovery element.

## Claims

1. Sliding assembly (100) for a sliding device for a vehicle seat, comprising an outer casing (102) within which at least one anchoring mechanism (20) is housed, wherein said at least one anchoring mechanism (20) is movable between an operative position, in which it extends outside said outer casing (102) and protrudes therefrom to slidably engage a lower rail of a guide of a sliding device, and an inoperative position, in which it is retracted within said outer casing (102), **characterized in that** said at least one anchoring mechanism (20) comprises a first anchoring element (22) made in the form of a driving shaft and at least one second anchoring element (24), rotatably mounted at a first end thereof on said first anchoring element and provided at its second opposite end with a protruding edge (24a), said protruding edge (24a) protruding from said outer casing (102) when said anchoring mechanism is in the operative position, **in that** said first anchoring element (22) is movable with a translational motion and drags with it said at least one second anchoring element (24), and **in that** an abutment (110) is provided inside said outer casing (102), which abutment is capable of interfering with said at least one second anchoring element (24) during its translational movement to cause it to rotate towards the inside of said outer casing (102), the extent of the translation of said first anchoring element (22) and of the consequent rotation towards the inside of said at least one second anchoring element being sufficient to bring said at least one anchoring mechanism (20) from said operative position to said inoperative position.

2. Sliding assembly (100) according to claim 1, wherein said at least one anchoring mechanism (20) comprises two second anchoring elements (24), mounted on opposite sides of said first anchoring element (22) and provided with protruding edges (24a) adapted to protrude from opposite sides of said outer casing (102).

3. Sliding assembly (100) according to claim 1 or 2, wherein said at least one anchoring mechanism (20) comprises a torsion spring (26) which urges said second anchoring element(s) (24) towards the outside of said outer casing.

4. Sliding assembly (100) according to any of claims 1 - 3, wherein said abutment (110) is made in the form of a block mounted on a side wall of said outer casing and protruding inwardly, in a direction substantially perpendicular to said side wall.

5. Sliding assembly (100) according to any of claims 1 - 4, wherein said sliding assembly comprises an actuating element (30) for bringing said at least one anchoring mechanism (20) from said operative position to said inoperative position, wherein said actuating element is made in the form of a slider (30) sliding along said outer casing, wherein said slider (30) comprises at least one vertically inclined second driving surface (36), and wherein said first anchoring element (22) is engaged with said at least one vertically inclined second driving surface (36) to slide along it.

6. Sliding assembly (100) according to any of claims 1 - 5, wherein at least one locking element (10) is also received inside said outer casing (102) and wherein said at least one locking element (10) is movable between an operative position, in which it extends outside said outer casing (102) and protrudes therefrom to engage without the possibility of sliding with said lower rail of said track of said sliding device, and an inoperative position, in which it is retracted inside said outer casing (102)

7. Sliding assembly (100) according to claims 5 and 6, wherein said actuating element made in the form of a slider (30) is also configured to bring said at least one locking element (10) from said operative position to said inoperative position, wherein said slider (30) comprises at least a first driving surface (32) vertically inclined, and wherein said at least one locking element (10) is provided with a driving stem (14) which engages with said first driving surface (32) of said slider (30).

8. Sliding assembly (100) according to claim 7, wherein said at least one first driving surface (32) comprises a lower portion (32a) and an upper portion (32b) sized such that said driving rod (14) of said at least one locking element (10) slides from said lower portion to said upper portion of said at least one first driving surface when said slider (30) slides through a first stroke with a first length, and wherein said at least one second driving surface (36) comprises a lower portion (36a) and an upper portion (36b) sized such that said first anchoring element (22) of said at least one anchoring mechanism (20) slides along said lower portion of said at least one second driving surface when said slider (30) slides through said first stroke with said first length and slides from said lower portion to said upper portion of said at least one second driving surface (36) when said slider (30) slides through a second stroke with a second length, greater than said first length.

9. Sliding assembly (100) according to claim 8, wherein said sliding assembly comprises a stop element (40) disposed along the path of said slider (30), said stop element being movable between an operative position, in which it limits the sliding of said slider to said first stroke of said first length, to an inoperative position, in which it allows said slider to slide through said second stroke of said second length.

10. Sliding assembly (100) according to any of claims 1 - 9, wherein said sliding assembly (100) comprises at least one play recovery element (50), comprising an engagement component (52), movable between an operative position, in which it extends outside of said outer casing (102) and protrudes therefrom to engage said lower rail, and an inoperative position, in which it is retracted within said outer casing (102).

11. Sliding assembly (100) according to claim 10, wherein said at least one play recovery element (50) comprises a fixed component (54), mounted on said outer casing (102), and a movable component (56), said fixed component and said movable component being provided with respective cam profiles (54a, 56a) cooperating with each other, and wherein said engagement component (52) is connected to said movable component (56) to be brought from said operative position to said inoperative position.

12. Sliding assembly (100) according to claims 5 and 11, wherein said actuating element made in the form of a slider (30) is also configured to set in motion said movable component (56) of said at least one play recovery element (50) to bring said engagement component of said at least one play recovery element (50) from said operative position to said inoperative position, wherein said slider comprises a protrusion (38) suitable for a butting and cooperating with a projection (56b) of said movable component (56) of said at least one play recovery element (50).

13. Sliding device for vehicle seats, comprising a pair of sliding tracks each comprising a lower rail provided with a plurality of seats distributed along the length of said lower rail, **characterized in that** it comprises for each lower rail a sliding assembly (100) according to any of claims 1 - 12.

14. Sliding device for vehicle seats according to claim 13 when dependent on claim 5, comprising a first releasing member capable of acting on said actuating element (30) of said sliding assembly (100).

15. Sliding device for vehicle seats according to claim 13 when dependent on claim 9, comprising a second releasing member capable of acting on said stop element (40) of said sliding assembly (100).
